# EUROPEAN PATENT APPLICATION

(11) **EP 1 426 279 A2**
(43) Date of publication of application: **09.06.2004**
(21) Application number: 03257651.4
(22) Date of filing: 04.12.2003
(51) Int. Cl.: B62K 15/00

(54) **Folding device for a handlebar**

(30) Priority: 05.12.2002 CN 02280220 U
(71) Applicant: Ying, Xiongxin, Zhi Ying Town Yong Kang City Zhe Jiang Province 321306 (CN)
(72) Inventor: Ying, Xiongxin, Zhi Ying Town Yong Kang City Zhe Jiang Province 321306 (CN)
(74) Representative: Lamb, Richard Andrew

(57) **Abstract**

The present invention discloses a overturning and folding device for handlebar, which comprises a tube (2) extending vertically from handlebar with an end (13), a connecting member (15) next to the end (13), an eccentric axle (1) and a lug bolt (12), a hole (21) in the axial direction and a hole (20) in the perpendicular direction are formed at the end (13) of said tube (2), they communicate with each other. The connecting member (15) is engaged to fork of bicycle. The connecting member (15) defines a space (14) through which the lug bolt (12) can rotate from axial position to perpendicular position. The lug bolt (12) is fixed within said hole (21) and space (14) by a fastener (8). The eccentric axle (1) is fitted rotatably in the hole (20) and hole (5) on head of lug bolt (12). A protrusion (3) on the end (13) is provided to match a recess (6) formed in corresponding position of said connecting member (15). A shim (18) hinged to the connecting member (15) and rotatable around said lug bolt (12) is provided between the connecting member (15) and the fastener (8). The device further comprises a torsion spring (17). One end of the torsion spring (17) is fixed to the connecting member (15) and the other end disposed on the shim (18). The eccentric axle (1) is connected to a lever (4). After the above-mentioned structure is adopted, the handlebar assembly can be folded and rotated to the direction in line with the main body. The folding can be done more conveniently and more timesavingly and the dimension after folding is decreased.

## Description

The present invention relates to a folding device, and in particular to a folding device for the handlebar of an electrobicycle or ordinary bicycle.

To facilitate transportation, packing and carrying, the handlebar assembly of electrobicycle or ordinary bicycle is generally designed to be of foldable structure. The current means of folding the handlebar assembly of an electrobicycle or ordinary bicycle is generally to hinge the front fork tube and then to fix them by tightening screws. Although folding of the handlebar assembly can be achieved in this way, in operation, tools must be used to mount and dismount the screws in order to proceed the folding. The folding is not only troublesome but also time-consuming. Additionally, when the handlebar assembly is folded in this way, the direction of folded handlebar cannot be changed to the same direction of the bicycle body. As a result, only the height of the bicycle can be decreased, but the width of the bicycle body and whole dimension of its package are still rather bulky.

To address the shortcomings of prior art, and in particular that tools must be used to proceed the folding of electrobicycle or ordinary bicycle, and/or that the folded body is still bulky, an object of present invention is to provide an overturning and folding device for handlebar which can be folded more conveniently and more timesavingly and can be rotated to the direction in line with the main body, and/or to provide improvements to such folding arrangements generally.

According to the present invention there is provided an overturning and folding device for a handlebar of a bicycle as described in the accompanying claims.

The technical solution adopted by an aspect of an embodiment of the present invention is that the device comprises a tube extending vertically from handlebar with an end, a connecting member next to the end, an eccentric axle and a lug bolt, a hole in the axial direction and a hole in the perpendicular direction are formed on the end of said tube, they communicate with each other. The connecting member is engaged to front fork of bicycle, and it defines a space through which the lug bolt can rotate from axial position to perpendicular position. The lug bolt is fixed within said hole in the axial direction and said space by a fastener. The eccentric axle is fitted rotatably in the hole in the perpendicular direction and the hole on head of lug bolt.

A protrusion on the end is provided to match a recess formed in corresponding position of said connecting member, said protrusion and recess are wedge-shaped.

A shim hinged to the connecting member and rotatable around said lug bolt is provided between the connecting member and the fastener.

The device further comprises a torsion spring. One end of the torsion spring is fixed to the connecting member and the other end disposed on the shim.

Said eccentric axle is connected with a lever.

In a particular aspect of an embodiment an overturning and folding device for a handlebar of a bicycle may generally comprise a tube extending from a handlebar and attached to a fork of the bicycle by a cooperating end and connecting member. The connecting member and end are attached together by a lug bolt located within a hole in the end and a space within the connecting member such that in use the end and connecting member are rotatable relative to each other about an axis of the lug bolt, and such that the lug bolt can be pivoted perpendicular to the axis of the lug bolt into and within the space defined in the connecting member. A fastener and head end of the lug bolt secures the lug bolt and are arranged to move the lug bolt axially so as to loosen or tighten the connection of the end to connecting member.

In aspects of the present invention, with rotation of the eccentric axle, the lug bolt is made to move axially in hole, so as to loosen or tighten the connection of the handlebar tube and connecting member. The match of the wedge-shaped recess of the connecting member with the wedge-shaped protrusion of end keeps the handlebar in working position without wobbling leftwards and rightwards. The turnover shim provides a space for axial movement of the handlebar at the time of folding. The torsion spring can ensure that the turnover shim is pressed tightly on the lug bolt, so that when the connection of the handlebar and the connecting member are loosened with each other, the turnover shim will not come apart from the lug bolt, safe driving is guaranteed. The space provided on the connecting member can make the handlebar rotate to the direction in line with the main body at the time of folding. The device has such advantages as reasonable construction, more convenient and timesaving folding operation, smaller dimension after folding, and beautiful, tasteful outward appearance, etc.

The present invention will now be described by way of example only with reference to the following figures in which:
Fig.1 is an exploded diagram of the structure of the overturning and folding device for handlebar according to an embodiment of the present invention.
Fig.2 is schematic diagram of the structure of the overturning and folding device for handlebar according to an embodiment of the present invention in fastened state.
Fig.3 is a schematic diagram of the structure of the overturning and folding device for handlebar according to an embodiment of the present invention while folding.

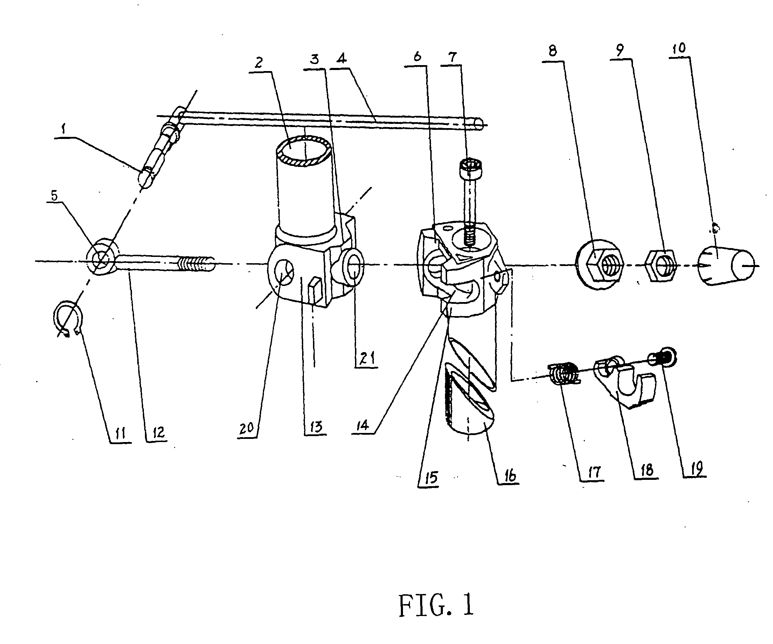

Fig.1 shows the specific embodiment of the overturning and folding device for handlebar of the present invention. The upright tube 2 extends downward from a handlebar. A hole 20 in the perpendicular direction for receiving an eccentric axle 1, and a hole 21 in the axial direction for receiving lug bolt 12 are formed on an end 13 of the tube 2 and communicate with each other. At the crossing point of the holes 20,21, the eccentric axle 1 passes through the hole 5 on head of lug bolt 12 to drive and move the lug bolt 12 in an axial direction. Connecting member 15 is connected with the front fork tube by means of bolt 7. It defines a space 14 for receiving lug bolt 12, in which the bolt 12 can rotate from axial position to perpendicular position. The interface between end 13 and connecting member 15 may be plane. Preferably though, the end 13 has a wedge-shaped protrusion 3 matching a wedge-shaped recess 6 formed on connecting member 15 to achieve a more reliable connection.

The lug bolt 12 is inserted into hole 21, and the eccentric axle 1 is then put into hole 20 on end 13 of handlebar tube 2 and the hole 5 of lug bolt 12 successively. One end of eccentric axle 1 is connected with a lever 4 and the other end is fixed with a garter spring 11. The end 13 and connecting member 15 is fastened by connection of lug bolt 12 and fastener 8. The fastener 8 is a nut. Between the connecting member 15 and the fastener 8 a semicircular turnover shim 18 is provided. The turnover shim 18 is hinged to the connecting member 15 and is rotatable around lug bolt 12. A torsion spring 17 is provided to ensure the shim 18 contacts the lug bolt 12. One end of the torsion spring 17 is fixed on the connecting member 15 and the other end is disposed on the turnover shim 18. A thin nut 9 is mounted on the lug bolt 12 next to nut 8 to prevent the fastener 8 from loosening. A plastic cap 10 is covered on nut 8 and nut 9 to enhance the aesthetic vision of appearance.

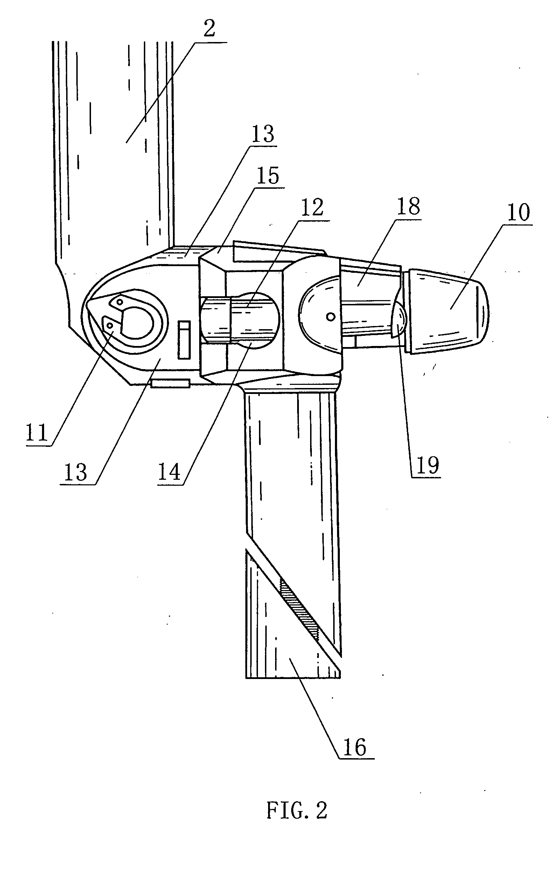

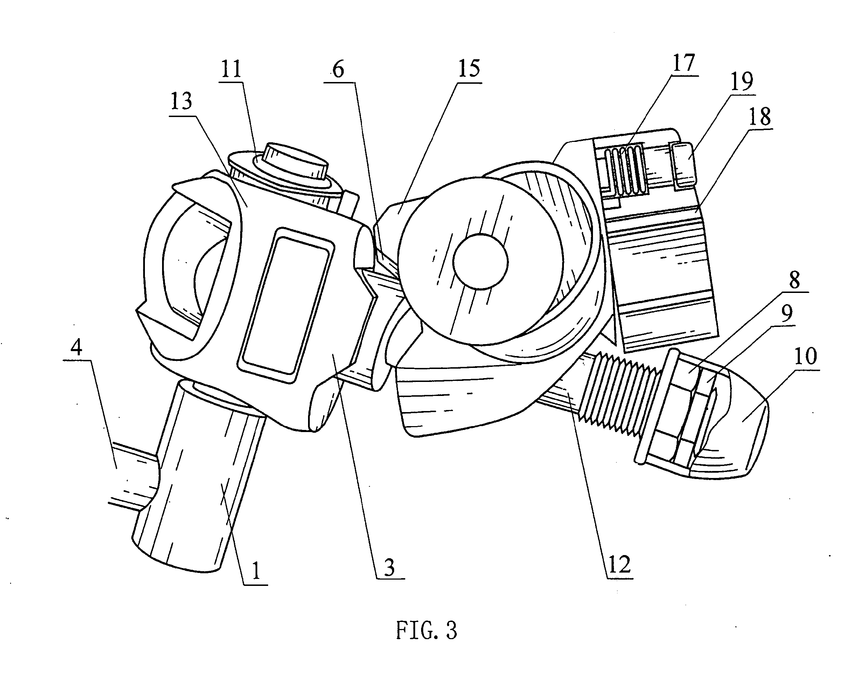

Refering to Figures 2 and 3, in the working position, the eccentric axle 1 is partial and biased to the opposite side of connecting member 15. The wedge-shaped protrusion 3 of the end 13 and the wedge-shaped recess 6 of the connecting member 15 match with each other and are fixed by means of the lug bolt 12, the turnover shim 18, the fastener 8, the thin nut 9 and the plastic cap 10. When folding proceeds, the lever 4 is first turned, and then the eccentric axle 1 rotates along with it. The centre of the eccentric axle 1 then becomes closer to the connecting member 15. As a result, the lug bolt 12 is made to move axially and the matching and abutment of the end 13 and the connecting member 15 becomes loose. The turnover shim 18 is then turned around to detach it from the lug bolt 12, so that the end 13 and the connecting member 15 can have space for further axial movement and rotation. The end 13 can then be pulled to separate the wedge-shaped protrusion 3 from recess 6 of connecting member 15, and the lug bolt 12 as well as tube 2 turned to a perpendicular direction, and then the handlebar turned for 180°around lug bolt 12 to make the handlebar assembly in line with the bicycle body, so as to complete the folding operation.

Conversely, at the time of unfolding and unbending, the handlebar is turned to its upright position, and the protrusion 3 of the end 13 embedded into recess 6 of connecting member 15. The shim 18 is turned and pivoted to press the lug bolt 12. Finally, the lever 4 is pulled to a fastening position, to move the centre of eccentric axle 1 as well as the lug bolt 12 to the opposite side of the connecting member 15 so as to fasten the connection of end 13 and connecting member 15. The connection between handlebar and front fork 16 can thereby be easily achieved as well by the aforesaid structure.

## Claims

1. An overturning and folding device for a handlebar comprising a tube (2) extending vertically from the handlebar with an end (13), a connecting member (15) next to the end (13), an eccentric axle (1) and a lug bolt (12),
a hole (21) in the axial direction and a hole (20) in the perpendicular direction are formed at the end (13) of said tube (2), they communicate with each other,
said connecting member (15) is engaged to the fork (16) of a bicycle, the connecting member (15) defines a space (14) through which the lug bolt (12) can rotate from axial position to perpendicular position,
lug bolt (12) is fixed within said hole (21) and space (14) by a fastener (8), said eccentric axle (1) is fitted rotatably in the hole (20) and hole (5) on the head of lug bolt (12).

2. The overturning and folding device for a handlebar according to Claim 1, wherein a protrusion (3) on the end (13) is provided to match a recess (6) formed in corresponding position of said connecting member (15);

3. The overturning and folding device for a handlebar according to claim 2, wherein said protrusion (3) and recess (6) are wedge-shaped.

4. The overturning and folding device for a handlebar according to any preceding claim, wherein a shim (18) hinged to the connecting member (15) and rotatable around said lug bolt (12) is provided between the connecting member (15) and the fastener (8).

5. The overturning and folding device for a handlebar according to claim 4, wherein the device further comprises a torsion spring (17), one end of the torsion spring (17) fixed to the connecting member (15) and the other end disposed on the shim (18).

6. The overturning and folding device for a handlebar according to any on e of claims 1 to 5, wherein said eccentric axle (1) is connected to a lever (4).

7. The overturning and folding device for a handlebar according to claims 6, wherein said fastener (8) is a nut.

8. An overturning and folding device for a handlebar of a bicycle comprising a tube (2) extending from a handlebar and attached to a fork of the bicycle by a cooperating end (13) and connecting member (15), the connecting member and end (13) are attached together by a lug bolt (12) located within a hole (21) in the end (13) and a space (14) within the connecting member (15) such that in use the end (13) and connecting member (15) are rotatable relative to each other about an axis of the lug bolt (12) and such that the lug bolt (12) can be pivoted perpendicular to the axis of the lug bolt (12) into and within the space (14) defined in the connecting member (15), a fastener (8) and head end of the lug bolt (12) secures the lug bolt (12) and are arranged to move the lug bolt (12) axially so as to loosen or tighten the connection of the end (13) to connecting member (15).
